(19) **Europäisches Patentamt European Patent Office Office européen des brevets**

(11) **EP 2 369 880 B1**

(12) **EUROPEAN PATENT SPECIFICATION**

(45) Date of publication and mention of the grant of the patent:
**21.08.2013 Bulletin 2013/34**

(51) Int Cl.:
*H04W 56/00* (2009.01)    *H04J 3/06* (2006.01)

(21) Application number: **10305282.5**

(22) Date of filing: **23.03.2010**

(54) **Method for synchronizing nodes of a mesh wireless network**

Verfahren zur Synchronisierung von Knoten eines drahtlosen Maschennetzwerks

Procédé de noeuds synchronisés d'un réseau sans fil maillé

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**28.09.2011 Bulletin 2011/39**

(73) Proprietors:
- **Mitsubishi Electric Corporation Chiyoda-ku Tokyo 100-8310 (JP)**
- **Mitsubishi Electric R&D Centre Europe B.V. 1119 NS Schiphol Rijk (NL)**

(72) Inventor: **Gresset, Nicolas 35830, BETTON (FR)**

(74) Representative: **Blot, Philippe Robert Emile Cabinet Lavoix 2, place d'Estienne d'Orves 75441 Paris Cedex 09 (FR)**

(56) References cited:
| | |
|---|---|
| EP-A1- 2 339 761 | US-A1- 2005 185 628 |
| US-A1- 2007 014 269 | US-A1- 2009 047 913 |
| US-B2- 7 349 362 | |

**Description**

The present invention relates to a method for synchronizing nodes of a mesh wireless network and to a device for implementing such a method.

The invention relates more particularly to the synchronization of home base stations (HeNBs). Such home base stations are deployed, for example, for providing a seamless wireless network inside houses or in a building of a company, a mall, a station or more generally any large building. Thus, in such a network, the number of HeNBs is large.

There exist several methods for synchronizing nodes of a mesh wireless network to a reference clock. For example, each node can listen to the closest neighbor signal and align its synchronization to the received signal. Unfortunately, when the wireless network is dense, i.e., when each node is surrounded by several nodes, it is better to make a trade-off between all the neighboring nodes synchronization time. There exist several centralized or semi-centralized algorithms in order to jointly perform the synchronization of several nodes when no propagation delay is observed between the nodes.

For instance, in the state of the art, each node transmits to its neighboring nodes a synchronization signal aligned to a synchronization time dedicated to said node and each node determines its synchronization time based on the synchronization signal.

In the state of the art, when a propagation delay is observed between two nodes, the nodes need to exchange some specific data in order to apply the state of the art synchronization algorithm.

However, the propagation delays are unknown at the nodes, which makes difficult the use of algorithms known in the state of the art that often assume no propagation delay between the nodes or involve some scheduling for the node transmission.

Solutions have been proposed to solve this problem as synchronization methods for a mesh wireless network which are fully distributed among the nodes to be synchronized.

For example solutions have been described in the patent document US 7 349 362 B2 and the patent application documents referenced as EP 2 339 761 A1, US 2007/014269 A1, US 2005/185628 A1 and US 2009/047913 A1.

The invention also gives a solution to the above problem by proposing an alternate synchronization method for a mesh wireless network which is fully distributed among the nodes to be synchronized.

The method relates to a method for synchronizing fixed nodes of a mesh wireless network, each fixed node transmitting to its neighboring fixed nodes a synchronization signal aligned to a synchronization time dedicated to said fixed node and each fixed node determining its synchronization time based on the synchronization signal, characterized in that it comprises the steps, carried out for each fixed node, of:

- detecting a synchronization sub-frame
- randomly choosing the state of said fixed node between a transmission and a reception state;
- if the chosen state for said fixed node is a transmission state, transmitting the synchronization signal to the neighboring fixed nodes and then returning to the step of detecting a synchronization subframe;
- if the chosen state for said fixed node is a reception state :

  - receiving the synchronization signals transmitted from the neighboring fixed nodes in a transmission state;
  - extracting the synchronization times of the neighboring fixed nodes from the received synchronization signals;
  - combining the synchronization time of said node with the extracted synchronization times of the neighboring fixed nodes; and
  - updating the synchronization time of said fixed node to be equal to the combining result;
  - then returning to the step of detecting a synchronization sub-frame.

According to particular embodiments, the method for synchronizing fixed nodes comprises one or more of the following characteristics:

- the combining is linear and it comprises applying weighting coefficients to the synchronization times of said fixed node and of the neighboring fixed nodes,
- the weighting coefficients are function of the number of neighboring fixed nodes in a transmission state,
- it comprises a step of storing the synchronization times of all the fixed nodes in a table and the combining uses the last stored synchronization times of the neighboring fixed nodes,
- the combining comprises summing the last stored synchronization times of the neighboring fixed nodes and dividing the sum result by the number of the neighboring fixed nodes,
- it comprises a step, carried for each fixed node, of correcting the updated synchronization time of said fixed node in order to reduce a synchronization time drift due to propagation delays between fixed nodes,
- the correcting step uses a Least Mean Squares adaptive algorithm,

- it comprises a step of defining different classes of fixed nodes, the probability, for each fixed node, to choose a transmission or a reception state being dependent on its own class,
- each fixed node transmits its own class along with the synchronization signal and the weighting coefficient applied at each receiving fixed node to the synchronization time of each transmitting fixed node depends on the class of the transmitting fixed node, and
- the fixed nodes are home base stations.

A better understanding of the invention will be facilitated by reading the following description, which is given solely by way of examples and with reference to drawings in which :

- Figure 1 is an architectural view of a mesh wireless network wherein the method for synchronizing nodes according to the invention is implemented; and
- Figure 2 is a flow chart illustrating the steps of the method for synchronizing nodes according to the invention.

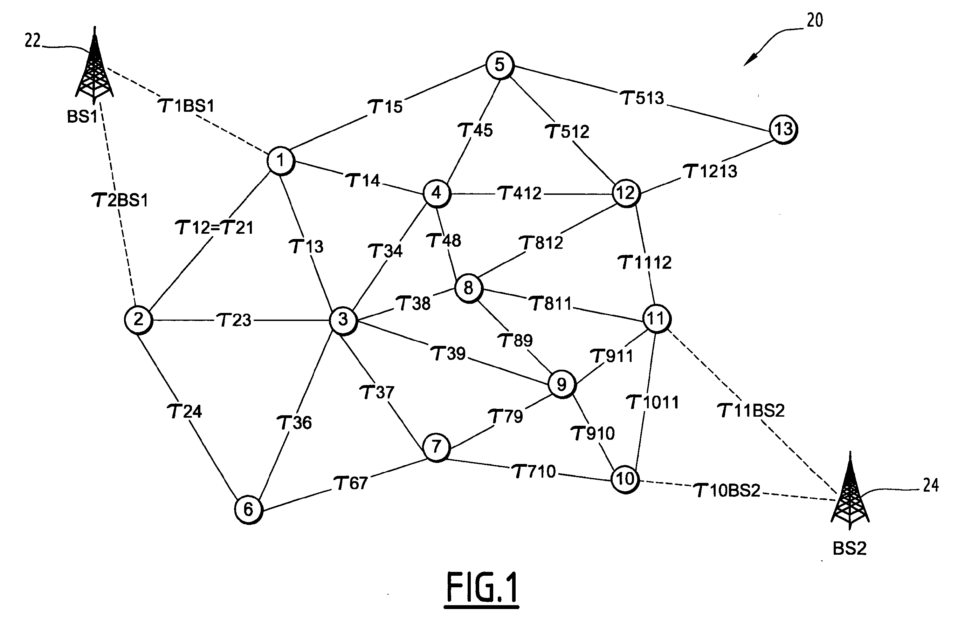

Figure 1 illustrates a plurality of nodes 1, 2, 3, 4, 5, 6, 7, 8, 9, 10, 11, 12, 13 of a mesh wireless network 20.

The nodes 1 to 13 are communicating devices consisting for example in home base stations (HeNBs).

The network 20 also comprises base stations BS1 22 and BS2 24.

In this mesh network 20, each node can listen to the signals transmitted by other nodes or base stations of the network.

However, when a node is in a reception state, it receives the signal of a neighboring node only if the link quality between the node and such neighboring node is sufficient.

In figure 1, if the link quality is sufficient, a line is drawn such as for example between the nodes 1 and 2 or between the node 1 and the base station BS1 22.

In the wireless network 20, there are unknown propagation delays between the nodes. Thus, a signal sent by a node i is received by a node j with a delay $\tau_{ij}=\tau_{ji}$ as illustrated in Figure 1.

For the sake of synchronization, each node 1 to 13 transmits to its neighboring nodes a synchronization signal during synchronization sub-frames in order to allow for its neighboring nodes to determine its synchronization time. Each node knows when synchronization sub-frames occur, for example by a coarse synchronization time estimation.

For example, node 8 transmits to its neighboring nodes, i.e. nodes 3, 4, 12, 11 and 9 a synchronization signal aligned to a synchronization time dedicated to said node 8 in order to allow these nodes to determine its synchronization time.

However, the estimation of the synchronization time of a node by its neighboring nodes is not precise as the received signals at the neighboring nodes are impacted by an additive noise and delayed by the propagation delays which are unknown.

Due to the propagation delay between two connected nodes i, j, the node i observes at a given time n the synchronization time at the preceding time (n-1) of the neighboring node j as follows:

$$\hat{\varphi}_{ij}^{(n-1)} = \varphi_j^{(n-1)} + \tau_{ij}.$$

For the example of node 8, the synchronization signal transmitted to neighboring nodes 3, 4, 12, 11 and 9 is delayed by propagation delays $\tau38$, $\tau48$, $\tau812$, $\tau811$ and $\tau89$ respectively.

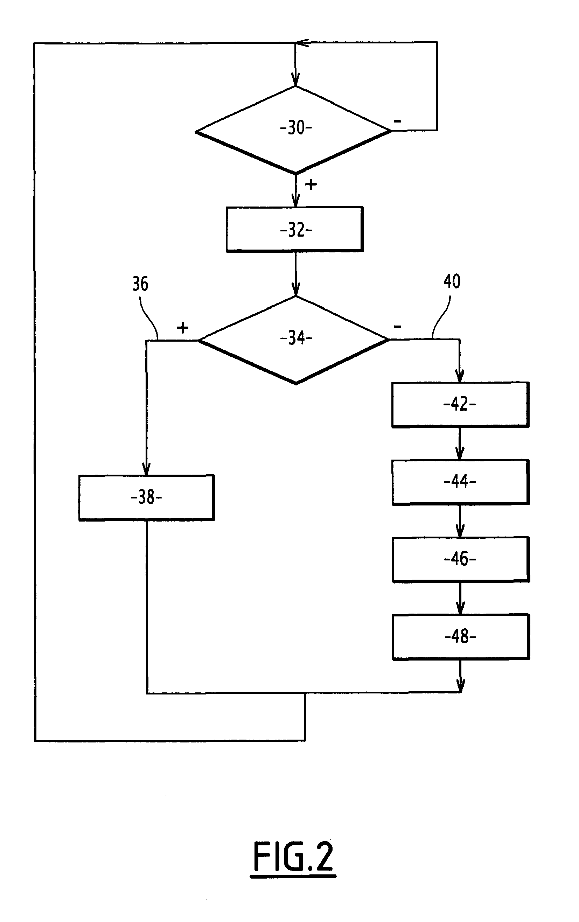

The flow chart of Figure 2 illustrates the steps of the method for synchronizing the nodes of the mesh network 20 according to the invention.

The steps of the method illustrated in figure 2 are carried for each node k (k chosen from 1 to 13) of the mesh network 20 in an iterative manner.

In 30, the node k detects a synchronization sub-frame.

In 32, it chooses randomly its state between a transmission and a reception state.

Step 34 indicates the test whether the node k is in a transmission state.

If the chosen state is a transmission state, the node k transmits in 38 its synchronization signal to the neighboring nodes and returns to step 30 of detection of a synchronization sub-frame.

If the chosen state is in a reception state in 40, the node k receives in 42 the synchronization signals transmitted from the neighboring nodes in a transmission state and it extracts the relative synchronization times with respect to its own synchronization time of these transmitting neighboring nodes from the received synchronization signals.

In 44, the node k combines its own synchronization time with the extracted synchronization times of the neighboring nodes.

In a particular embodiment of the invention, in 46, the node 4 corrects the combining result in order to reduce a synchronization time drift due to propagation delays between the nodes. This correction in step 46 will be detailed later in the description.

In 48, the node k updates its synchronization time to be equal to the combining result.

Then, the node k returns to step 30 of detection of a synchronization sub-frame.

In a preferred embodiment of the invention, the combining carried in 44 is linear. Thus, node k obtains in 48 a new synchronization time $\varphi_k^{(n)}$ at the $n^{th}$ iteration of the method by applying the following relations:

$$\forall k \in \overline{\Omega}_n \quad \varphi_k^{(n)} = \sum_j A_j \hat{\varphi}_{kj}^{(n-1)}$$

$$\forall k \in \Omega_n \quad \varphi_k^{(n)} = \varphi_k^{(n-1)}$$

where :

- $\overline{\Omega}_n$ is the set of nodes in a reception state at the $n^{th}$ iteration,
- $\Omega_n$ is the set of node in a transmission state at the $n^{th}$ iteration,
- $A_j$ are weighing coefficients applied to the extracted synchronization times of the neighboring nodes in a transmission state.

By definition, the node k has $N_k$ neighboring nodes. At the $n^{th}$ iteration of the method, $|\Omega_{n,k}|$ neighboring nodes of the node k are in a transmission state and $|\overline{\Omega}_{n,k}|$ neighboring nodes are in a reception state with $N_k = |\Omega_{n,k}| + |\overline{\Omega}_{n,k}|$

The invention is particularly novel in that each node chooses randomly, for example with equal probability, its state "transmission" or "reception" at each new iteration of the method, and in that the choice of the coefficient $A_j$ take into account this random behavior of the network for ensuring convergence to a situation where all nodes are synchronized altogether. The choice of the coefficients will be discussed in the following description.

According to a first embodiment of the invention, the new synchronization time $\varphi_k^{(n)}$ of a node k in a reception state at the $n^{th}$ iteration of the method is updated in 48 by the rule

$$\forall k \in \overline{\Omega}_n \quad \varphi_k^{(n)} = \alpha\left(\Omega_{n,k}\right)\varphi_k^{(n-1)} + \sum_{j \in \Omega_{n,k}} \beta_j\left(\Omega_{n,k}\right)\hat{\varphi}_{kj}^{(n-1)}$$

where $\alpha(\Omega_{n,k})$ is the weight coefficient associated to the actual synchronization time of the considered node k and $\beta_j$ $(\Omega_{n,k})$ is a weight coefficient associated to the synchronization time of the node j received by the node k. The weights are chosen in order to guarantee a convergence of the system.

For example, a possible choice is

$$\beta_j\left(\Omega_{n,k}\right) = \frac{\alpha\left(\Omega_{n,k}\right)-1}{|\Omega_{n,k}|} \text{ and } \alpha\left(\Omega_{n,k}\right)<1.$$

In this case, the system converges to a mean value plus a mismatch which is different for each node, and mainly depends on the propagation delays of the wireless links arriving at the node k. Thus, the ponderation value is a function of the number of nodes in a transmission state at the n-th iteration, and received by the considered node.

For a given node, the mismatch is a function of the average of the propagation delays on the communication links between the considered node k and the neighboring nodes. Thus, the mismatch decreases as the number of neighbours increases, or as the distribution of propagation delays is more equal for all nodes. Furthermore, as two neighboring nodes have a similar radio environment, they will tend to the same synchronization time with a good probability. Thus, even if the whole nodes of the system are not perfectly synchronized one with each other, the nodes appear to be synchronized in a given neighborhood.

The coefficient $\alpha(\Omega_{n,k})$ can be chosen independently from the propagation delays, and lower than 1. The choice of $\alpha(\Omega_{n,k})$ impacts the convergence speed of the algorithm. As an option, $\beta_j(\Omega_{n,k})$ is a function of the path gain between nodes j and k.

According to a second embodiment of the invention, the method comprises a step of storing the synchronization times of all nodes in a table, the combining step 44 using the last stored synchronization time of all the neigboring nodes.

By doing this, the algorithm converges more quickly. The table of synchronization times of neighbors contains new and old values $V_j$ for each neighbor. The table also includes the synchronization time $V_k$ of the node itself.

In this case, the rule for updating the synchronization time $\varphi_k^{(n)}$ of the k-th node in reception mode, is for example

$$\forall k \in \overline{\Omega}_n \quad \varphi_k^{(n)} = \sum_j \frac{V_j}{N_k} .$$

As discussed above with reference to the first embodiment, without any delay spread for the transmission of signals between nodes, the weights in the linear combination are chosen to ensure the system convergence as a function of the number of neighboring nodes or as a function of the number of transmitting nodes at a given time. However, in a practical system, a delay spread is observed for the propagation of signals between two nodes. With the propagation delay spread, the new time synchronization value is

$$\forall k \in \overline{\Omega}_n \quad \sum_j A_j \hat{\varphi}_{kj}^{(n-1)} = \sum_j A_j \varphi_j^{(n-1)} + \sum_j A_j \tau_{kj} .$$

Thus, a positive mismatch is added at each iteration of the method which propagates by inference between nodes. If the delay spread values are sufficiently high, a linear drift of all the synchronization values of the nodes (and common to all the nodes) is observed. This means that even if the nodes stay synchronized altogether, the time clock frequency is virtually decreased.

In order to reduce this issue, during the correcting step 46, the considered node k learns the slope of the linear drift and corrects its estimated synchronization time by a value $M_k^{(n)}$.

Finally, the new synchronization time is obtained by

$$\forall k \in \overline{\Omega}_n \quad \varphi_k^{(n)} = \sum_j A_j \hat{\varphi}_{kj}^{(n-1)} - M_k^{(n)} = \sum_j A_j \varphi_j^{(n-1)} + \sum_j A_j \tau_{kj} - M_k^{(n)}$$

where the $M_k^{(n)}$ coefficient is adapted and classically computed, using for example, a classical Least Mean Squares adaptive algorithm, in order to minimize $\left\| \sum_j A_j \tau_{kj} - M_k^{(n)} \right\|$ or with a statistical approach $E\left[ \left\| \sum_j A_j \tau_{kj} - M_k^{(n)} \right\| \right]$.

Furthermore, this tracking also has the advantage of tracking the clock drift due to cheap hardware impairments, in a collaborative fashion, which is particularly useful when nodes are home base stations.

A fourth embodiment, particularly suitable if some nodes have other means of synchronization as optical fiber networks for example, aims at propagating these reference synchronization information to the other nodes.

Thus, in this fourth embodiment, the method comprises defining different classes of nodes depending on their type of external synchronization means: none, optical, GPS... and broadcasting these classes along with the synchronization signals dedicated to the nodes.

According to its class, a node might change its probability of transmission or reception state. For example, for a node being synchronized to a very accurate clock (e.g. GPS), it should not switch into reception mode, and only inject the clock into the mesh wireless network.

Each node detects if the received synchronization time belongs to one class of nodes and it weights the estimated synchronization time of said neighboring node accordingly. For example, by considering the example of Figure 1, where base stations BS1 22 and BS2 24 are synchronized by a GPS, a node will consider large weights coefficients if the path gain of the base station to node transmission is large and low weights coefficients if the path gain of the base station to node transmission is low. Thus, nodes that are close to a base station (nodes 1 and 2 in Figure 1 for example) will be synchronized to the base station, and influence the whole nodes network as an anchor for the synchronization time. At the end, the whole network will be synchronized to the macro network, even nodes out of the coverage of macro cells.

The method of the present invention is implemented in a device for synchronizing nodes comprising means allowing the implementation of the method described above.

The method according to the invention is particularly useful when a propagation delay is observed between the nodes and it is more particularly well suited for applications of home base stations.

## Claims

1. Method for synchronizing fixed nodes (1, 2, 3, 4, 5, 6, 7, 8, 9, 10, 11, 12, 13) of a mesh wireless network (20), each fixed node transmitting during synchronization subframes to its neighboring fixed nodes a synchronization signal aligned to a synchronization time dedicated to said fixed node and each fixed node determining its synchronization time based on the synchronization signal, **characterized in that** it comprises the steps, carried out for each fixed node, of:

   - detecting (30) a synchronization sub-frame;
   - then randomly choosing (32) the state of said fixed node between a transmission and a reception state;
   - if the chosen state for said fixed node is a transmission state (36), transmitting (38) the synchronization signal to the neighboring fixed nodes and then returning to the step of detecting a synchronization sub-frame;
   - if the chosen state for said fixed node is a reception state (40) :
   - receiving (42) the synchronization signals transmitted from the neighboring fixed nodes in a transmission state;
   - extracting (42) the synchronization times of the neighboring fixed nodes from the received synchronization signals;
   - combining (44) the synchronization time of said fixed node with the extracted synchronization times of the neighboring fixed nodes; and
   - updating (48) the synchronization time of said fixed node to be equal to the combining result;
   - then returning to the step of detecting a synchronization sub-frame.

2. Method for synchronizing fixed nodes (1, 2, 3, 4, 5, 6, 7, 8, 9, 10, 11, 12, 13) according to claim 1, **characterized in that** the combining (44) is linear and **in that** it comprises applying weighting coefficients to the synchronization times of said fixed node and of the neighboring fixed nodes.

3. Method for synchronizing fixed nodes (1, 2, 3, 4, 5, 6, 7, 8, 9, 10, 11, 12, 13) according to claim 2, **characterized in that** the weighting coefficients are function of the number of neighboring fixed nodes in a transmission state.

4. Method for synchronizing fixed nodes (1, 2, 3, 4, 5, 6, 7, 8, 9, 10, 11, 12, 13) according to claim 1, **characterized in that** it comprises a step of storing the synchronization times of all the fixed nodes in a table and **in that** the combining (44) uses the last stored synchronization times of the neighboring fixed nodes.

5. Method for synchronizing nodes (1, 2, 3, 4, 5, 6, 7, 8, 9, 10, 11, 12, 13) according to claim 4, **characterized in that** the combining comprises summing the last stored synchronization times of the neighboring fixed nodes and dividing the sum result by the number of the neighboring fixed nodes.

6. Method for synchronizing fixed nodes (1, 2, 3, 4, 5, 6, 7, 8, 9, 10, 11, 12, 13) according to any one of claims 1 to 5, **characterized in that** it comprises a step, carried for each fixed node, of correcting (46) the updated synchronization time of said fixed node in order to reduce a synchronization time drift due to propagation delays between fixed nodes.

7. Method for synchronizing fixed nodes (1, 2, 3, 4, 5, 6, 7, 8, 9, 10, 11, 12, 13) according to claim 6, **characterized in that** the correcting step uses a Least Mean Squares adaptive algorithm.

8. Method for synchronizing fixed nodes (1, 2, 3, 4, 5, 6, 7, 8, 9, 10, 11, 12, 13) according to any one of claims 1 to 7, **characterized in that** it comprises a step of defining different classes of fixed nodes depending on their type of external synchronization means, the probability, for each fixed node, to choose a transmission or a reception state being dependent on its own class.

9. Method for synchronizing fixed nodes (1, 2, 3, 4, 5, 6, 7, 8, 9, 10, 11, 12, 13) according to claim 8, **characterized in that** each fixed node transmits its own class along with the synchronization signal and **in that** the weighting coefficient applied at each receiving fixed node to the synchronization time of each transmitting fixed node depends on the class of the transmitting fixed node.

10. Method for synchronizing nodes (1, 2, 3, 4, 5, 6, 7, 8, 9, 10, 11, 12, 13) according to any one of claims 1 to 9, **characterized in that** the fixed nodes are home base stations.

**Patentansprüche**

1. Verfahren zum Synchronisieren von festen Knoten (1, 2, 3, 4, 5, 6, 7, 8, 9, 10, 11, 12, 13) eines Maschen-Drahtlos-Netzwerks (20), wobei jeder fixierte Knoten, während Synchronisations-Sub-Rahmen, ein Synchronisationssignal an seine benachbarten festen Knoten sendet, welches auf eine dem besagten festen Knoten zugeordnete Synchronisationszeit abgestimmt ist, und jeder fixierte Knoten seine Synchronisationszeit basierend auf dem Synchronisationssignal ermittelt, **dadurch gekennzeichnet, dass** es die Schritte, welche für jeden festen Knoten ausgeführt werden, aufweist:

- Detektieren (30) eines Synchronisations-Sub-Rahmens;
- dann zufälliges Auswählen (32) des Zustands des besagten festen Knotens zwischen einem Sende- und einem Empfangszustand;
- wenn der ausgewählte Zustand des besagten festen Knotens ein Sendezustand (36) ist, Senden (38) des Synchronisationssignals an die benachbarten festen Knoten und dann Zurückkehren zum Schritt des Detektierens eines Synchronisations-Sub-Rahmens;
- wenn der ausgewählte Zustand des besagten festen Knotens ein Empfangszustand (40) ist:
- Empfangen (42) der von den benachbarten festen Knoten, welche in einem Sendezustand sind, gesendeten Synchronisationssignale;
- Extrahieren (42) der Synchronisationszeiten der benachbarten festen Knoten aus den empfangenen Synchronisationssignalen;
- Kombinieren (44) der Synchronisationszeit des besagten festen Knotens mit den extrahierten Synchronisationszeiten der benachbarten festen Knoten; und
- Aktualisieren (48) der Synchronisationszeit des besagten festen Knotens, so dass sie gleich ist dem Resultat des Kombinierens;
- dann Rückkehren zum Schritt des Detektierens eines Synchronisations-Sub-Rahmens.

2. Verfahren zum Synchronisieren von festen Knoten (1, 2, 3, 4, 5, 6, 7, 8, 9, 10, 11, 12, 13) gemäß Anspruch 1, **dadurch gekennzeichnet, dass** das Kombinieren (44) linear ist und dass es aufweist, das Anwenden von Gewichtungskoeffizienten auf die Synchronisationszeiten des besagten festen Knotens und der benachbarten festen Knoten.

3. Verfahren zum Synchronisieren von festen Knoten (1, 2, 3, 4, 5, 6, 7, 8, 9, 10, 11, 12, 13) gemäß Anspruch 2, **dadurch gekennzeichnet, dass** die Gewichtungskoeffizienten abhängig von der Anzahl von benachbarten festen Knoten sind, welche in einem Sendezustand sind.

4. Verfahren zum Synchronisieren von festen Knoten (1, 2, 3, 4, 5, 6, 7, 8, 9, 10, 11, 12, 13) gemäß Anspruch 1, **dadurch gekennzeichnet, dass** es einen Schritt des Speicherns der Synchronisationszeiten von allen der festen Knoten in einer Tabelle aufweist und dass das Kombinieren (44) die zuletzt gespeicherten Synchronisationszeiten der benachbarten festen Knoten nutzt.

5. Verfahren zum Synchronisieren von festen Knoten (1, 2, 3, 4, 5, 6, 7, 8, 9, 10, 11, 12, 13) gemäß Anspruch 4, **dadurch gekennzeichnet, dass** das Kombinieren das Summieren der letzten gespeicherten Synchronisationszeiten der benachbarten festen Knoten und das Teilen des Ergebnisses der Summe durch die Anzahl der benachbarten festen Knoten aufweist.

**6.** Verfahren zum Synchronisieren von festen Knoten (1, 2, 3, 4, 5, 6, 7, 8, 9, 10, 11, 12, 13) gemäß irgendeinem der Ansprüche 1 bis 5, **dadurch gekennzeichnet, dass** es einen Korrektur-Schritt (46) der aktualisierten Synchronisationszeit des besagten festen Knotens aufweist, welcher für jeden festen Knoten ausgeführt wird, um eine Synchronisationszeitdrift aufgrund von Laufzeitverzögerungen zwischen festen Knoten zu reduzieren.

**7.** Verfahren zum Synchronisieren von festen Knoten (1, 2, 3, 4, 5, 6, 7, 8, 9, 10, 11, 12, 13) gemäß Anspruch 6, **dadurch gekennzeichnet, dass** der Korrektur-Schritt einen adaptiven Kleinste-Mittlere-Quadrate-Algorithmus (LMS-Algorithmus) nutzt.

**8.** Verfahren zum Synchronisieren von festen Knoten (1, 2, 3, 4, 5, 6, 7, 8, 9, 10, 11, 12, 13) gemäß irgendeinem der Ansprüche 1 bis 7, **dadurch gekennzeichnet, dass** es einen Schritt aufweist des Definierens verschiedener Klassen von festen Knoten, welche vom Typ ihrer externen Synchronisationsmittel abhängen, wobei die Wahrscheinlichkeit, für jeden festen Knoten, einen Sende- oder Empfangszustand auszuwählen, von seiner eigenen Klasse abhängt.

**9.** Verfahren zum Synchronisieren von festen Knoten (1, 2, 3, 4, 5, 6, 7, 8, 9, 10, 11, 12, 13) gemäß Anspruch 8, **dadurch gekennzeichnet, dass** jeder fixierte Knoten seine eigene Klasse zusammen mit dem Synchronisationssignal sendet und dass der Gewichtungskoeffizient, welcher bei jedem empfangenden festen Knoten auf die Synchronisationszeit von jedem sendenden festen Knoten angewendet wird, von der Klasse des sendenden festen Knotens abhängig ist.

**10.** Verfahren zum Synchronisieren von festen Knoten (1, 2, 3, 4, 5, 6, 7, 8, 9, 10, 11, 12, 13) gemäß irgendeinem der Ansprüche 1 bis 9, **dadurch gekennzeichnet, dass** die festen Knoten Heim-Basisstationen sind.

**Revendications**

**1.** Procédé de synchronisation de noeuds fixes (1, 2, 3, 4, 5, 6, 7, 8, 9, 10, 11, 12, 13) d'un réseau maillé sans fil (20), chaque noeud fixe transmettant, au cours de sous-trames de synchronisation à ses noeuds fixes avoisinants, un signal de synchronisation aligné à un temps de signalisation dédié audit noeud fixe, et chaque noeud fixe déterminant son temps de synchronisation sur la base du signal de synchronisation, **caractérisé en ce qu'**il comprend les étapes suivantes, exécutées pour chaque noeud fixe :

détecter (30) une sous-trame de synchronisation ;
choisir ensuite aléatoirement (32) l'état dudit noeud fixe entre un état de transmission et un état de réception ;
si l'état choisi pour ledit noeud fixe est un état de transmission (36), transmettre (38) le signal de synchronisation aux noeuds fixes avoisinants, puis retourner à l'étape de détection d'une sous-trame de synchronisation ;
si l'état choisi pour ledit noeud fixe est un état de réception (40) ;
recevoir (42) les signaux de synchronisation transmis depuis les noeuds fixes avoisinants dans un état de transmission ;
extraire (42) les temps de synchronisation des noeuds fixes avoisinants à partir des signaux de synchronisation reçus ;
combiner (44) le temps de synchronisation dudit noeud fixe avec les temps de synchronisation des noeuds fixes avoisinants ; et
mettre à jour (48) le temps de synchronisation dudit noeud fixe pour qu'il soit égal au résultat de combinaison ;
ensuite, retourner à l'étape de détection d'une sous-trame de synchronisation.

**2.** Procédé de synchronisation de noeuds fixes (1, 2, 3, 4, 5, 6, 7, 8, 9, 10, 11, 12, 13) selon la revendication 1, **caractérisé en ce que** la combinaison (44) est linéaire et **en ce qu'**elle comprend d'appliquer des coefficients de pondération aux temps de synchronisation dudit noeud fixe et desdits noeuds fixes avoisinants.

**3.** Procédé de synchronisation de noeuds fixes (1, 2, 3, 4, 5, 6, 7, 8, 9, 10, 11, 12, 13) selon la revendication 2, **caractérisé en ce que** les coefficients de pondération sont fonction du nombre de noeuds fixes avoisinants dans un état de transmission.

**4.** Procédé de synchronisation de noeuds fixes (1, 2, 3, 4, 5, 6, 7, 8, 9, 10, 11, 12, 13) selon la revendication 1, **caractérisé en ce qu'**il comprend une étape de stockage des temps de synchronisation de tous les noeuds fixes dans une table et **en ce que** la combinaison (44) utilise les derniers temps de synchronisation stockés des noeuds fixes avoisinants.

**5.** Procédé de synchronisation de noeuds (1, 2, 3, 4, 5, 6, 7, 8, 9, 10, 11, 12, 13) selon la revendication 4, **caractérisé en ce que** la combinaison comprend de sommer les derniers temps de synchronisation stockés des noeuds fixes avoisinants et de diviser la somme résultante par le nombre de noeuds fixes avoisinants.

**6.** Procédé de synchronisation de noeuds fixes (1, 2, 3, 4, 5, 6, 7, 8, 9, 10, 11, 12, 13) selon l'une quelconque des revendications 1 à 5, **caractérisé en ce qu'**il comprend une étape, exécutée pour chaque noeud fixe, de correction (46) du temps de synchronisation mis à jour dudit noeud fixe de manière à réduire une dérive du temps de synchronisation due à des délais de propagation entre les noeuds fixes.

**7.** Procédé de synchronisation de noeuds fixes (1, 2, 3, 4, 5, 6, 7, 8, 9, 10, 11, 12, 13) selon la revendication 6, **caractérisé en ce que** l'étape de correction utilise un algorithme adaptatif des moindres carrés.

**8.** Procédé de synchronisation de noeuds fixes (1, 2, 3, 4, 5, 6, 7, 8, 9, 10, 11, 12, 13) selon l'une quelconque des revendications 1 à 7, **caractérisé en ce qu'**il comprend une étape de définition de différentes classes de noeuds fixes en fonction de leur type de moyen de synchronisation externe, la probabilité, pour chaque noeud fixe, de choisir un état de transmission ou un état de réception étant dépendante de sa propre classe.

**9.** Procédé de synchronisation de noeuds fixes (1, 2, 3, 4, 5, 6, 7, 8, 9, 10, 11, 12, 13) selon la revendication 8, **caractérisé en ce que** chaque noeud fixe transmet sa propre classe en même temps que le signal de synchronisation et **en ce que** le coefficient de pondération appliqué à chaque noeud fixe en réception au temps de synchronisation de chaque noeud fixe en transmission dépend de la classe du noeud fixe en transmission.

**10.** Procédé de synchronisation de noeuds (1, 2, 3, 4, 5, 6, 7, 8, 9, 10, 11, 12, 13) selon l'une quelconque des revendications 1 à 9, **caractérisé en ce que** les noeuds fixes sont des stations de base locales.

**FIG.1**

FIG.2

**REFERENCES CITED IN THE DESCRIPTION**

**Patent documents cited in the description**

- US 7349362 B2
- EP 2339761 A1
- US 2007014269 A1
- US 2005185628 A1
- US 2009047913 A1